# EUROPEAN PATENT APPLICATION

(11) **EP 2 602 717 A1**
(43) Date of publication of application: **12.06.2013**
(21) Application number: 12184895.6
(22) Date of filing: 18.09.2012
(51) Int. Cl.: G06F 9/50, H04L 29/06

(54) **Method, gateway, and system for sharing and streaming media files provided by remote network storage devices**

(30) Priority: 09.12.2011 CN 201110409292
(71) Applicant: Huawei Device Co., Ltd., Longgang District Shenzhen Guangdong 518129 (CN)
(72) Inventor: Li, Jie, 518129 Shenzhen (CN); Pang, Min, 518129 Shenzhen (CN); Zhang, Xiaotian, 518129 Shenzhen (CN)
(74) Representative: Isarpatent

(57) **Abstract**

The present invention discloses a method, a gateway, and a system for sharing a media file, and belongs to the network field. The method includes: searching a shared folder in a local area network according to an IP address of a terminal in the local area network; mounting the searched shared folder to a locally preset folder; and analyzing the shared folder that is mounted to the locally preset folder, and broadcasting an analysis result to all terminals in the local area network. The gateway includes a searching module, a mounting module, and a broadcasting module. In the present invention, by virtue of a DLNA media sharing capability and a mounting operation of the gateway, a media file on a terminal that has no DLNA sharing capability itself in a local area network is shared in the local area network and sharing of the media file is implemented, so that another device in the local area network can access the media file on the terminal through a DLNA player.

## Description

### FIELD OF THE INVENTION

The present invention relates to the network field, and in particular, to a method, a gateway, and a system for sharing a media file.

### BACKGROUND OF THE INVENTION

The DLNA (Digital Living Network Alliance, digital living network alliance) network is a standard that may be observed by enterprises and its objective is to solve interconnection and intercommunication between a wireless network and a wired network including a personal computer (personal computer, PC), consumer electronics, and a mobile device, so as to make unlimited sharing and increasing of digital media and a content service possible.

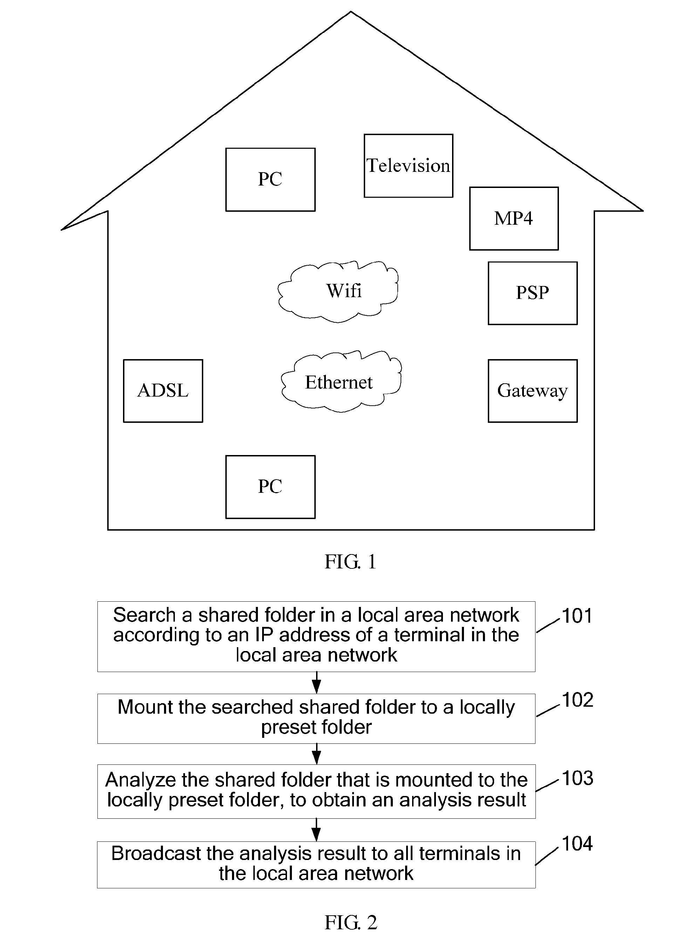

Referring to a diagram of elements of a family local area network shown in FIG. 1, a gateway and various family devices are mainly included. The gateway is connected to the family local area network in a wired or wireless way through an Ethernet or Wifi component, and meanwhile, the gateway is connected to the Internet through an ADSL to implement intercommunication between a local area network and an external network. DLNA is a set of conventions that are based on UPNP (Universal Plug and Play, universal plug and play) and another media technology and are to implement free sharing of network media.

When a media file is shared in the prior art, a gateway can often support a DLNA Media Server (DLNA media server). When a device in a local area network plays a media file on another device, the media file on the another device needs to be mounted to the gateway through a USB interface to implement DLNA sharing of the media file, for example, plugging a mobile device stored with the media file into the USB interface of the gateway to implement sharing.

The prior art has the following disadvantages: Media files downloaded by a PC user by browsing a web page are directly saved in a PC usually, but the PC itself cannot provide DLNA sharing of these media files, so that another device supporting DLNA in the local area network cannot directly access the media files saved on the PC.

### SUMMARY OF THE INVENTION

To share a media file saved on a PC in a local area network with a gateway, and implement sharing of the media file in the local area network, embodiments of the present invention provide a method, a gateway, and a system for sharing a media file. The technical solutions are as follows:
An embodiment of the present invention provides a method for sharing a media file, where the method includes:
   searching a shared folder in a local area network according to an IP address of a terminal in the local area network;
   mounting the searched shared folder to a locally preset folder;
   analyzing the shared folder that is mounted to the locally preset folder, to obtain an analysis result; and
   broadcasting the analysis result to all terminals in the local area network.

An embodiment of the present invention further provides a gateway, where the gateway includes:
a searching module, configured to search a shared folder in a local area network according to an IP address of a terminal in the local area network;
a mounting module, configured to mount the shared folder that is searched by the searching module to a locally preset folder;
an analyzing module, configured to analyze the shared folder that is mounted by the mounting module to the locally preset folder, to obtain an analysis result; and
a broadcasting module, configured to broadcast the analysis result to all terminals in the local area network, where the analysis result is obtained through the analyzing of the analyzing module.

An embodiment of the present invention further provides a system for sharing a media file, where the system includes a gateway and a terminal;
the terminal is configured to set a media file as a shared folder; and
the gateway is configured to search the shared folder in a local area network according to an IP address of the terminal, mount the searched shared folder to a locally preset folder, analyze the shared folder that is mounted to the locally preset folder, and broadcast an analysis result to all terminals in the local area network.

Beneficial effects brought by the technical solutions provided in the embodiments of the present invention are: By virtue of a DLNA media sharing capability and a mounting operation of a gateway, a media file on a terminal that has no DLNA sharing capability itself in a local area network is shared in the local area network, and sharing of the media file is implemented, so that another device in the local area network can access the media file on the terminal through a DLNA player.

### BRIEF DESCRIPTION OF THE DRAWINGS

To describe the technical solutions in the embodiments of the present invention more clearly, the accompanying drawings required for describing the embodiments are briefly introduced in the following. Apparently, the accompanying drawings in the following description are only some embodiments of the present invention, and persons skilled in the art may derive other accompanying drawings from these accompanying drawings without creative efforts.
FIG. 1 is a diagram of elements of a family local area network provided in the prior art;
FIG.2 is a flow chart of a method for sharing a media file according to Embodiment 1 of the present invention;
FIG. 3 is a flow chart of a method for sharing a media file according to Embodiment 2 of the present invention;
FIG. 4 is a schematic diagram of a mounting operation according to Embodiment 2 of the present invention;
FIG. 5 is a schematic structural diagram of a gateway according to Embodiment 3 of the present invention; and
FIG. 6 is a schematic structural diagram of a system for sharing a media file according to Embodiment 4 of the present invention.

### DETAILED DESCRIPTION OF THE EMBODIMENTS

To make the objectives, technical solutions, and advantages of the present invention clearer, the embodiments of the present invention are described in further detail in the following with reference to the accompanying drawings.

A DLNA media network includes a DLNA Media Server (DLNA media server), a DLNA Media Controller (DLNA media controller), and a DLNA Media Render (DLNA media render).

The DLNA media server is configured to store a media file, analyze the media file, and inform another device of an analysis result. Because the DLNA media server is based on UPNP, the DLNA media server can actively broadcast its Media Server identity to another device in a network. Therefore, once the DLNA media server is online, another device in a local area network can find it. In this embodiment, a gateway plays a role of a DLNA media server in the DLNA media network.

The DLNA media controller can collect all media files in the DLNA media network, select to play or browse a media file, and inform the DLNA media render of a selected media file.

The DLNA media render can read a media file from the DLNA media server and selectively play a media file according to control of the DLNA media controller on the media file.

In this embodiment, the DLNA media controller and the DLNA media render may be set in different devices respectively, or in a render supporting DLNA media playing, such as a television and an integrated DLNA media controller. In the embodiments of the present invention, the DLNA media controller and the DLNA media render are considered as DLNA Media Players (DLNA media players) in the local area network.

### Embodiment 1

Referring to FIG. 2, an embodiment of the present invention provides a method for sharing a media file, where the method includes:
Step 101: Search a shared folder in a local area network according to an IP address of a terminal in the local area network.
Step 102: Mount the searched shared folder to a locally preset folder.
Step 103: Analyze the shared folder that is mounted to the locally preset folder, to obtain an analysis result.
Step 104: Broadcast the analysis result to all terminals in the local area network.

With the method provided in this embodiment of the present invention, by virtue of a DLNA media sharing capability and a mounting operation of a gateway, a media file on a terminal that has no DLNA sharing capability itself in a local area network is freely shared, the media file on the terminal is shared with the gateway in the local area network, and sharing of the media file is implemented, so that another device in the local area network can access the media file on the terminal through a DLNA player.

### Embodiment 2

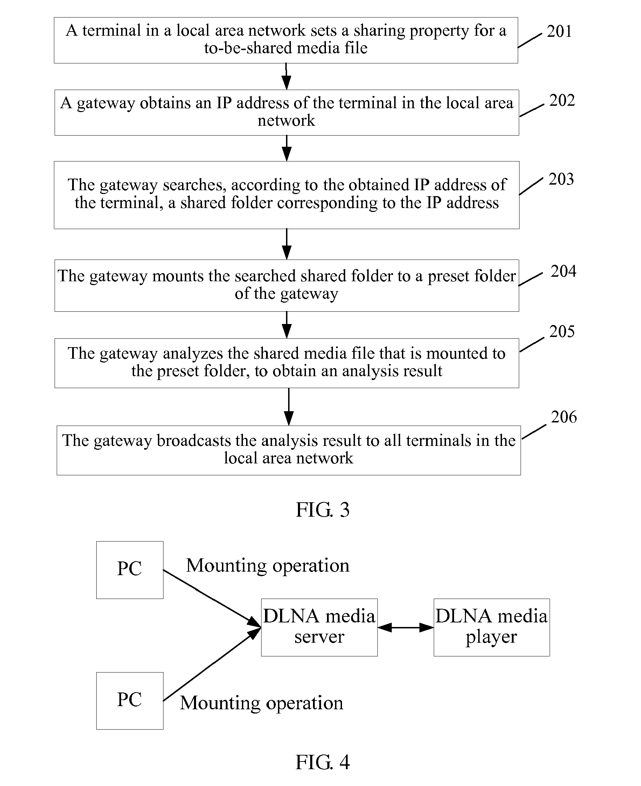

Referring to FIG. 3, an embodiment of the present invention provides a method for sharing a media file, where the method includes:
Step 201: A terminal in a local area network sets a sharing property for a to-be-shared media file.

Various devices may exist in the local area network, such as a gateway, a television, and a PC terminal. In this embodiment, that a terminal sharing a media file is a PC terminal is taken as an example for illustration. The PC terminal may be a PC terminal that supports a DLNA Media Server, such as a PC installed with an operating system of windows 7. In this case, the gateway may not have a function of the DLNA Media Server; and in another aspect, the PC terminal in this embodiment may also be a PC terminal that does not support a DLNA Media Server. In this case, the gateway needs to have a function of the DLNA Media Server, so as to substitute for the DLNA Media Server. An operating system of the PC terminal may be a windows operating system, and may also be a Linux operating system, and an operating system of the gateway is a Linux operating system.

Specifically, when a media file in the PC is shared with the gateway, a sharing property of a folder where the media file in the PC is located needs to be set. A method in which the PC sets the sharing property of the folder where the media file is located is manually completed by a user. For example, a shared folder of the PC in this embodiment of the present invention is //192.168.1.5/video, and a folder with any name is created in a mnt directory of the gateway, which is assumed to be "smbShare". mnt is a directory scanned by default through a DLNA function in the gateway and mnt is an abbreviation of mount (mount).

Step 202: The gateway obtains an IP address of the terminal in the local area network.

In this embodiment, the gateway is the key to establishing a family local area network. IP addresses of all terminals in the local area network are allocated by the gateway. Therefore, the gateway itself records the IP addresses of all the terminals.

For this step, when broadcasting an analysis result corresponding to a shared folder to another device in the local area network by obtaining the IP address of the terminal, the gateway can know, according to the IP address, in which terminal the shared folder is specifically set, so that shared folders on different terminals can be distinguished.

Step 203: The gateway searches, according to the obtained IP address of the terminal, a shared folder corresponding to the IP address.

For this step, the gateway in this embodiment of the present invention is set with a samba sharing tool, namely the gateway supports a smaba client. The gateway receives a smbclient command input by a user and can query and find a name of a shared folder in each IP address in a network. When receiving one smbclient command that is related to an IP address of a PC and input in a shell (a computer term, usually called shell, which is used to be distinguished from kernel) by the user, the gateway can check, according to the command, whether the PC is set with a shared folder.

A format of the command input by the user in the shell is ./smbclient--list=IP address. For example, when the gateway receives a command input by the user in the shell as follows: ./smbclient --list=192.168.1.5, the gateway checks whether a PC whose IP address is 192.168.1.5 is set with a shared folder. At this time, a command execution result of the gateway is displayed as //192.168.1.5/video, namely, a shared folder set by the PC whose IP address is 192.168.1.5 is displayed, and the gateway finds that the PC is set with a shared folder video.

The samba is a tool suite for implementing an SMB protocol in Linux and UNIX systems, which is formed by a server program and a client program. A samba sharing tool can implement an SMB (Server Message Block, server message block) protocol in the Unix, which is also applicable to a Linux protocol. The SMB protocol is often used by the windows series to implement sharing of a magnetic disk and a printer. In the Linux, network sharing with Windows may also be implemented through the SMB protocol.

Step 204: The gateway mounts the searched shared folder to a preset folder of the gateway;

Referring to FIG. 4, the gateway uses a mount command of the Linux protocol to mount a shared folder in a network as a "file" of the Linux to a preset folder in a mnt directory of a Linux gateway. The preset folder is an empty folder. A mounting operation means that the gateway establishes a mapping between the shared folder on the PC and the empty folder of the gateway, so that another terminal that has a DLNA function in the local area network may directly access the shared folder through the gateway.

In this embodiment of the present invention, the preset folder of the Linux gateway is /mnt/ smbShare. The shared folder //192.168.1.5/video searched in the step 203 is mounted to a folder /mnt/ smbShare of the gateway, so that a shared folder on Windows of the PC is associated with a directory in linux. Therefore, accessing the folder /mnt/smbShare of the gateway is equivalent to accessing the folder //192.168.1.5/video on the PC.

A mount command executed by the gateway is specifically
mount -t cifs -o username=admin, password=admin //192.168.1.5/video /mnt/smbShare

Parameters in the mount command executed by the gateway differ from each other when the PC adopts different file system formats. When a file system format adopted by the PC is a mount optical disk mirror image file, a mobile hard disk, a USB flash disk, Windows network sharing, or a UNIX NFS (Network File System, network file system), different parameters in the mount command are given in the following.

In this embodiment, there are many parameters in the mount (mount) command. Herein merely parameters of the mount command applied in the present invention are introduced.
mount [-t vfstype] [-o options] device dir, where:
A parameter -t vfstype is used to specify a type of a file system format, and the type of the file system format may not be specified generally. In this embodiment, the mount can automatically select a corresponding type according to the file system format. Frequently-used types include:
   optical disk or optical disk mirror image: iso9660
   DOS fat16 file system: msdos
   Windows 9x fat32 file system: vfat
   Windows NT ntfs file system: ntfs
   Mount Windows file network sharing: smbfs
   UNIX (LINUX) file network sharing: nfs

A parameter- o options is mainly used to describe a mount manner for sharing a media file. Frequently-used parameters include:
loop: used to mount one file to a system as a hard disk partition
ro: to mount a device in a read-only manner
rw: to mount a device in a read-write manner
iocharset: to specify a character set used for accessing a file system
A parameter: device refers to a device to be mounted.
dir refers to a mount point (mount point) of a device on a system.

In this embodiment, a Linux Kernel may use a Common Internet File System (cifs, common Internet file system) to replace smbfs. For example:
(1) When a mount command read by the gateway is .smbmount //192.88.88.11/www /home/www -o username=root, password=pw, and when a read mount command is: mount.cifs //192.88.88.11/www /home/www -o username=root, password=pw, the gateway can know that a mounted shared media file is a Windows file.
(2) When a mount command read by the gateway is .mount -t smbfs -o username=root, password=pw //192.88.88.11/www /home/www, and when a read mount command is: mount -t cifs -o username=root, password=abctest //192.88.88.11/www /home/www, the gateway can know that a mounted shared media file is a Windows file.

Step 205: The gateway analyzes the shared media file that is mounted to the preset folder, to obtain an analysis result.

The gateway obtains the analysis result by analyzing the shared media file, so that the gateway broadcasts the analysis result to another device in the local area network.

In this embodiment, that the gateway analyzes the shared media file that is mounted to the preset folder mainly refers to analyzing property information of the shared media file that is mounted to the preset folder, obtaining an analysis result, and storing the analysis result in the mnt directory of the gateway. For example, when the shared media file is an MP3 file, an analysis result obtained by analyzing the MP3 file includes detailed information such as an author of the MP3 file, a title of the MP3 file, and the duration of the MP3 file.

Step 206: The gateway broadcasts the analysis result to all terminals in the local area network.

In this embodiment, the gateway has a function of an ordinary DLNA Media Server. A gateway itself, installed with a Linux operating system, is used as a DLNA Media Server, and has a capability of scanning and sharing the analysis result in the mnt directory.

When scanning the analysis result that is mounted to the mnt directory, the gateway broadcasts the analysis result to another terminal in the local area network, so that the shared media file on the PC is shared in the local area network and sharing of a media file among terminals in the DLNA network is implemented.

In addition, when a device that supports a DLNA function in the local area network is required to play a shared media file on the PC, the device sends a command for playing the shared media file to the gateway. The gateway receives the command for playing the shared media file, obtains the shared media file according to built-in samba, and sends the shared media file to the device. The device plays the shared media file through a media player.

Specifically, the device is a television, and the television plays a shared media file on the PC, and when a DLNA media controller and a DLNA media render are set in the television, the DLNA media controller in the television selects to play the shared media file, and informs the DLNA media render of the shared media file. The DLNA media render in the television reads the shared media file from the gateway, and selectively plays the shared media file according to control of the DLNA media controller on the media file.

With the method provided in this embodiment of the present invention, by virtue of a DLNA media sharing capability and a mounting operation of a gateway, a media file on a PC that has no DLNA sharing capability itself in a local area network is shared with the gateway of the local area network, and sharing of the media file in the local area network is implemented, so that another device in the local area network can access the media file on the PC. In addition, even if an operating system of the gateway is different from an operating system of a terminal in the local area network, another terminal can access and play the shared folder after the terminal shares the media file.

### Embodiment 3

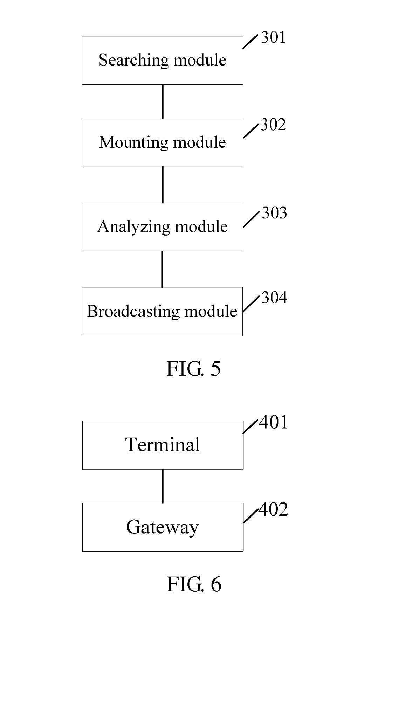

Referring to FIG. 5, an embodiment of the present invention provides a gateway, where the gateway includes a searching module 301, a mounting module 302, an analyzing module 303, and a broadcasting module 304, where
the searching module 301 is configured to search a shared folder in a local area network according to an IP address of a terminal in the local area network;
the mounting module 302 is configured to mount the shared folder that is searched by the searching module 301 to a locally preset folder;
the analyzing module 303 is configured to analyze the shared folder that is mounted by the mounting module 302 to the locally preset folder, to obtain an analysis result; and
the broadcasting module 304 is configured to broadcast the analysis result to all terminals in the local area network, where the analysis result is obtained through the analyzing of the analyzing module 303.

The searching module 301 is specifically configured to search the shared folder in the local area network according to a received smbclient command that is related to the IP address.

The mounting module 302 is specifically configured to mount the searched shared folder to the locally preset folder according to a mount command of the mounting module 302 itself.

With the gateway provided in this embodiment of the present invention, by virtue of a DLNA media sharing capability and a mounting operation, a media file on a terminal that has no DLNA sharing capability itself in a local area network is freely shared, the media file on the terminal is shared with the gateway in the local area network, and sharing of the media file in the local area network is implemented, so that another device in the local area network can access the media file on the terminal.

### Embodiment 4

Referring to FIG. 6, an embodiment of the present invention provides a system for sharing a media file, where the system includes a terminal 401 and a gateway 402, where
the terminal 401 is configured to set a media file as a shared folder; and
the gateway 402 is configured to search the shared folder in a local area network according to an IP address of the terminal, mount the searched shared folder to a locally preset folder, analyze the shared folder that is mounted to the locally preset folder, and broadcast an analysis result to all terminals in the local area network.

The terminal in this embodiment of the present invention may be a PC, a mobile hard disk, a USB flash disk, and so on. The gateway may be any gateway described in the foregoing embodiment 3.

With the system provided in this embodiment of the present invention, by virtue of a DLNA media sharing capability and a mounting operation of a gateway, a media file on a terminal that has no DLNA sharing capability itself in a local area network is shared with the gateway of the local area network, and sharing of the media file is implemented, so that another device in the local area network can access the media file on the terminal. The apparatus and the system provided in the embodiments of the present invention may specifically belong to the same conception with the method embodiment, and for their specific implementation processes, reference is made to the method embodiment, which is not repeated herein.

Persons of ordinary skill in the art may understand that all or a part of the steps of the foregoing embodiments may be implemented through hardware, or may be implemented by a program instructing relevant hardware. The program may be stored in a computer readable storage medium. The storage medium may be a read-only memory, a magnetic disk, or an optical disk.

The foregoing descriptions are only exemplary embodiments of the present invention and are not intended to limit the present invention. Any modification, equivalent replacement, or improvement made without departing the principle of the present invention shall all fall within the protection scope of the present invention.

## Claims

1. A method for sharing a media file, comprising:
searching a shared folder in a local area network according to an IP address of a terminal in the local area network;
mounting the searched shared folder to a locally preset folder;
analyzing the shared folder that is mounted to the locally preset folder, to obtain an analysis result; and
broadcasting the analysis result to all terminals in the local area network.

2. The method according to claim 1, further comprising:
receiving an instruction for playing the shared folder by the terminal in the local area network, and obtaining the shared folder according to a built-in sharing tool;
sending the shared folder to the terminal in the local area network, so that the terminal plays the shared folder.

3. The method according to claim 1, wherein the searching a shared folder in a local area network according to an IP address of a terminal in the local area network comprises:
searching, according to a received smbclient command that is related to the IP address of the terminal, a shared folder that is in the terminal and corresponds to the IP address in the local area network.

4. The method according to any one of claims 1 to 3, wherein the mounting the searched shared folder to the locally preset folder comprises:
mounting the searched shared folder to the locally preset folder according to a mount command.

5. The method according to claim 4, wherein the locally preset folder is a locally preset empty folder or a locally preset mount directory.

6. The method according to claim 4, wherein the analyzing the shared folder that is mounted to the locally preset folder, to obtain the analysis result specifically comprises:
analyzing a property of the shared folder that is mounted to the locally preset folder, to obtain detailed information of the property of the shared folder, wherein the detailed information of the property of the shared folder is used as the analysis result.

7. A gateway, comprising:
a searching module, configured to search a shared folder in a local area network according to an IP address of a terminal in the local area network;
a mounting module, configured to mount the shared folder that is searched by the searching module to a locally preset folder;
an analyzing module, configured to analyze the shared folder that is mounted by the mounting module to the locally preset folder, to obtain an analysis result; and
a broadcasting module, configured to broadcast the analysis result to all terminals in the local area network, wherein the analysis result is obtained through the analyzing of the analyzing module.

8. The gateway according to claim 7, wherein the searching module specifically is configured to search, according to a received smbclient command that is related to the IP address, a shared folder that is in the terminal and corresponds to the IP address in the local area network.

9. The gateway according to claim 7 or 8, wherein the mounting module specifically is configured to mounting the searched shared folder to the locally preset folder according to a mount command of the mounting module itself.

10. A system for sharing a media file, comprising a gateway and a terminal, wherein
the terminal is configured to set a media file as a shared folder; and
the gateway is configured to search the shared folder in a local area network according to an IP address of the terminal, mount the searched shared folder to a locally preset folder, analyze the shared folder that is mounted to the locally preset folder, and broadcast an analysis result to all terminals in the local area network.
